# EUROPÄISCHE PATENTANMELDUNG

(11) **EP 4 643 632 A1**
(43) Veröffentlichungstag der Anmeldung: **05.11.2025**
(21) Anmeldenummer: 25168505.3
(22) Anmeldetag: 04.04.2025
(51) Int. Cl.: A01D 41/12, F01P 11/06, F01P 11/12, A01D 43/08

(54) **KÜHLERSIEB-BAUGRUPPE FÜR EINE LANDMASCHINE**

(30) Priorität: 29.04.2024 DE 102024112001
(71) Anmelder: Maschinenfabrik Bernard Krone GmbH & Co. KG, 48480 Spelle (DE)
(72) Erfinder: Haar, Boris, 49584 Fürstenau (DE); Zirke, Viktor, 49497 Mettingen (DE); Harpert, Tobias, 48739 Legden (DE)

(57) **Zusammenfassung**

Die Erfindung betrifft eine Kühlersieb-Baugruppe (10) für eine Landmaschine (1), mit einem Rahmen (11), der wenigstens teilweise einen Siebraum (17) umgibt, durch welchen Kühlluft (A) in einer Durchtrittsrichtung (D) von einer Umgebungsseite (U) zu einer Kühlerseite (K) hindurchführbar ist und in dem ein sich entlang einer Siebfläche (E) erstreckendes Sieb (63) aufnehmbar ist, einer Reinigungseinheit (70) zum Reinigen des Siebs (63), aufweisend wenigstens eine Läufereinheit (20, 30), die am Rahmen (11) entlang einer Laufrichtung (L) translatorisch verschiebbar gelagert ist und sich quer zur Laufrichtung (L) in einer Breitenrichtung (B) erstreckt, sowie einer Antriebseinheit (40), welche einen Aktor (41) aufweist und durch welche wenigstens eine Läufereinheit (20, 30) in der Laufrichtung (L) oszillierend antreibbar ist. Um die Reinigung eines Kühlersiebs einer Landmaschine zu optimieren, ist erfindungsgemäß vorgesehen, dass die Antriebseinheit (40) einen Kopplungshebel (44) aufweist, der um eine bezüglich des Rahmens (11) stationäre Kopplungs-Schwenkachse (S) schwenkbar ist und der wenigstens indirekt antriebsübertragend an den Aktor (41) gekoppelt ist, wobei wenigstens ein Läuferarm (45, 55) des Kopplungshebels (44) wenigstens indirekt antriebsübertragend an eine Läufereinheit (20, 30) gekoppelt ist.

## Beschreibung

Die vorliegende Erfindung betrifft eine Kühlersieb-Baugruppe nach dem Oberbegriff von Anspruch 1.

Landwirtschaftlich genutzte Maschinen wie z.B. Feldhäcksler weisen verschiedene Komponenten auf, die beim Betrieb gekühlt werden müssen, z.B. einen Antriebsmotor, ein Getriebe etc. Typischerweise wird die Wärme von einer solchen zu kühlenden Komponente an ein Kühlmittel überführt, welches diese in einem Kühler an die Umgebungsluft abgibt. Um einen ausreichenden Wärmeaustausch zu ermöglichen, wird die Umgebungsluft durch einen Kühlerlüfter angesaugt und am Kühler entlang geführt. Jedoch ist die angesaugte Umgebungsluft oftmals durch den Ernteprozess stark verunreinigt, beispielsweise durch aufgewirbelten Staub, Erntegutreste oder dergleichen. Um zu verhindern, dass diese Verunreinigungen den Kühler verstopfen und dessen Kühlleistung verringern, wird die Umgebungsluft durch ein Kühlersieb angesaugt, das Partikel ab einer bestimmten Mindestgröße zurückhält.

Dabei kann aber auch das Kühlersieb selbst durch die abgefangenen Partikel innerhalb kurzer Zeit verstopfen. Zudem werden beim Schneiden und/oder Verarbeiten des Erntegutes insbesondere zuckerhaltige Flüssigkeiten frei, die das Kühlersieb verkleben können. Daher sind solche Kühlersiebe oftmals ausklappbar vorgesehen, um sie besser reinigen zu können. Um die Reinigung während des Feldbetriebes sicher zu stellen, ist es zudem bekannt, die Landmaschine mit einem automatischen Reinigungssystem zu versehen, welches das Sieb während des Betriebs reinigt. Typischerweise weist ein solches Reinigungssystem eine Saugeinheit auf, die mittels Unterdruck Verschmutzungen vom Kühlersieb absaugt. Um den Luftstrom nicht übermäßig zu beeinträchtigen, deckt die Saugeinheit nur einen kleineren Teil des Siebes ab und muss daher über das Sieb geführt werden, um sukzessive unterschiedliche Bereiche zu reinigen.

Wenngleich vereinzelt schon Saugeinheiten mit einer translatorischen Bewegung vorgeschlagen wurden, wird die Saugeinheit bei vielen Systemen im Stand der Technik rotatorisch angetrieben. Hierdurch ist es nicht möglich, ein rechteckiges Sieb adäquat zu reinigen, was allerdings aufgrund des oftmals rechteckigen Querschnitts des zugehörigen Kühlers wünschenswert wäre. Außerdem erfordern die im Stand der Technik bekannten Systeme oftmals eine Aufhängung vor einem mittigen Bereich des Siebes, wodurch der normalerweise dort am stärksten ausgebildete Luftstrom gestört wird. Weiterhin kann durch Antriebs- oder Aufhängungskomponenten der Reinigungseinheit die Dichtheit der Baugruppe beeinträchtigt werden. Das heißt, es können Lücken entstehen, durch die verunreinigte Luft am Sieb vorbei zum Kühler gelangen kann, oder Kühlluft kann entweichen, so dass die Kühlleistung verringert ist.

Die DE 10 2018 006 701 A1 zeigt eine selbstfahrende Erntemaschine mit einer Kühlereinheit, die von einer Filtervorrichtung mit einem luftdurchlässigen Filterelement vor Verunreinigungen geschützt wird. Das Filterelement ist mehrteilig ausgebildet. Eine Führung einer Reinigungsvorrichtung teilt das Filterelement in zwei Abschnitte, in denen jeweils ein Filtersegment angeordnet ist. Die Reinigungsvorrichtung weist eine translatorisch entlang der Führung bewegbare Absaugvorrichtung auf.

Die EP 1 262 645 B1 offenbart eine selbstfahrende Erntemaschine mit einer Kühleinheit und einer Reinigungseinrichtung für angesaugte Kühlluft. Letztere weist eine der Kühleinheit vorgeordnete, in Rotationsbewegung versetzbare, runde Siebeinrichtung sowie ein Sauggebläse auf, welches zum Absaugen der Siebeinrichtung vorgesehen ist. Die Kühleinheit ist rechteckförmig ausgebildet, so dass die Siebfläche die Kühleinheit nicht vollständig abdeckt.

Die EP 2 546 492 B1 offenbart ein rechteckiges Materialauffangsieb mit einer Siebreinigungsanordnung. Dabei ist ein hohler Arm, der mit einer Vakuumquelle verbindbar ist, über eine Oberfläche des Siebes bewegbar, wobei der hohle Arm eine Öffnung in einer ersten Seite aufweist, die an eine Oberfläche des Siebes angrenzt. Der Arm weist einen inneren Arm auf, der motorisch schwenkbar ist, und einen äußeren Arm, der radial gegenüber dem inneren Arm beweglich ist.

Die Druckschrift EP 2 754 873 B3 offenbart ein Ansaugsystem für Kühlluft, das ein rechteckförmiges Sieb aufweist. Zum Reinigen des Siebes weist das Ansaugsystem eine Absaugeinrichtung auf. Das Sieb kann insbesondere rechteckig ausgebildet sein und von Rahmenteilen eines Aufnahmegehäuses aufgenommen werden, wobei die Absaugeinrichtung als Laufwagen mittels eines Linearführungssystems gegenüber dem Sieb geführt wird.

Auch die EP 3 586 595 B1 offenbart einen Kühlerkorb mit einer Reinigungsvorrichtung, die zwei über die Oberfläche bewegbare Absaugarme aufweist, welche bezüglich einer rechteckigen Oberfläche des Kühlerkorbs um diagonal gegenüberliegende Lagerstellen schwenkbar sind.

Aufgabe der Erfindung ist es, die Reinigung eines Kühlersiebs einer Landmaschine zu optimieren.

Die Aufgabe wird gelöst mit einer Kühlersieb-Baugruppe mit den Merkmalen des unabhängigen Patentanspruchs 1. Vorteilhafte Ausführungsformen sind den abhängigen Ansprüchen entnehmbar.

Dafür wird eine Kühlersieb-Baugruppe für eine Landmaschine geschaffen, mit einem Rahmen, der wenigstens teilweise einen Siebraum umgibt, durch welchen Kühlluft in einer Durchtrittsrichtung von einer Umgebungsseite zu einer Kühlerseite hindurchführbar ist und in dem ein sich entlang einer Siebfläche erstreckendes Sieb aufnehmbar ist, einer Reinigungseinheit zum Reinigen des Siebs, aufweisend wenigstens eine Läufereinheit, die am Rahmen entlang einer Laufrichtung translatorisch verschiebbar gelagert ist und sich quer zur Laufrichtung in einer Breitenrichtung erstreckt, sowie einer Antriebseinheit, welche einen Aktor aufweist und durch welche wenigstens eine Läufereinheit in der Laufrichtung oszillierend antreibbar ist.

Die Kühlersieb-Baugruppe ist für eine Landmaschine vorgesehen, wobei es sich insbesondere um eine selbstfahrende Erntemaschine handeln kann, oder auch um einen Schlepper. Ein derartiger Schlepper kann mit einem Anbaugerät kombiniert werden oder ein Bearbeitungsgerät ohne eigenen Fahrantrieb ziehen, so dass er selbst zur Feldbearbeitung eingesetzt werden kann.

Die Kühlersieb-Baugruppe ist einem Kühlersieb zugeordnet und kann optional auch das Kühlersieb aufweisen. Das genannte Kühlersieb und somit auch die Kühlersieb-Baugruppe dienen dazu, einen Kühlluftstrom, welcher einem Kühler zugeführt wird, zu reinigen. Pflanzenteile sowie andere im Luftstrom mitgeführte Partikel werden wenigstens teilweise im Sieb zurückgehalten. Der Kühler ist normalerweise als dazu vorgesehen, ein Kühlmittel durch Wärmeabgabe an den Kühlluftstrom zu kühlen, wobei das Kühlmittel zuvor Wärme von einer zu kühlenden Komponente der Landmaschine aufgenommen hat, bspw. von einem Antriebsmotor oder einem Getriebe. Der Begriff "Kühlluft" ist nicht einschränkend hinsichtlich der Temperatur oder anderer Eigenschaften der Luft auszulegen, sondern bezeichnet lediglich, dass die Luft dazu vorgesehen ist, am Kühler Wärme aufzunehmen. Man kann die Kühlluft auch als Umgebungsluft bezeichnen.

Die Baugruppe weist einen Rahmen auf, der wenigstens teilweise einen Siebraum umgibt, durch welchen Kühlluft in einer Durchtrittsrichtung von einer Umgebungsseite zu einer Kühlerseite hindurchführbar ist. Der Rahmen kann zumindest in einigen Ausführungsformen auch als Gehäuse bezeichnet werden. Er umgibt wenigstens teilweise, normalerweise vollständig umlaufend, den Siebraum. Dabei bezeichnet die Kühlerseite diejenige Seite, die in eingebautem Zustand bezüglich des Strömungswegs näher am Kühler angeordnet ist, während die Umgebungsseite diejenige Seite bezeichnet, die bezüglich des Strömungswegs der Umgebung der Landmaschine zugewandt ist. Von dieser Seite strömt Umgebungsluft in den Siebraum. Nachfolgend bedeutet "umgebungsseitig" "auf der Umgebungsseite" und "kühlerseitig" bedeutet "auf der Kühlerseite". Wenngleich dies nicht erfindungswesentlich ist, wird der Kühlluftstrom in der Regel durch einen Kühlerlüfter oder ein Sauggebläse erzeugt. Der Siebraum dient einerseits zum Hindurchführen der Kühlluft, andererseits ist im Siebraum ein Sieb aufnehmbar. Das Sieb, welches auch als Kühlersieb bezeichnet werden kann, kann ein- oder mehrteilig ausgebildet sein. In letzterem Fall besteht es aus einer Mehrzahl von Siebelementen. Der Rahmen kann Halte-, Befestigungs- und/oder Führungselemente aufweisen, die das Einsetzen und/oder Sichern des Siebs in einer vorgesehenen Position unterstützen. In eingebautem Zustand erstreckt sich das Sieb entlang einer Siebfläche. Die Siebfläche ist einerseits durch die Geometrie des Siebs gegeben sowie andererseits durch die Einbauposition innerhalb des Rahmens. Dabei ist ein bestimmter Verlauf der Siebfläche vorgesehen, der sich auch bei nicht eingesetztem Sieb definieren lässt. Das Sieb ist bevorzugt rechteckig ausgebildet. Gleiches gilt, soweit zutreffend, für einzelne Siebelemente. Weiterhin bevorzugt ist die Siebfläche eben ausgebildet und kann somit auch als Siebebene bezeichnet werden.

Des Weiteren weist die Baugruppe eine Reinigungseinheit zum Reinigen des Siebs auf. "Reinigen" bezieht sich hier vorrangig auf das Entfernen von Verunreinigungen, z.B. Pflanzenteilen oder anderen Partikeln, vom Sieb. Die Reinigungseinheit weist ihrerseits wenigstens eine Läufereinheit auf, die am Rahmen entlang einer Laufrichtung translatorisch verschiebbar gelagert ist und sich quer zur Laufrichtung in einer Breitenrichtung erstreckt. Es können auch eine Mehrzahl von Läufereinheiten vorgesehen sein, insbesondere zwei Läufereinheiten. Als Teil der Reinigungseinheit steht die Funktion der Läufereinheit im Zusammenhang mit der Reinigung des Siebs. Dies kann sich unmittelbar auf das Reinigen beziehen, es kann sich aber z.B. auch auf eine Hilfsfunktion beziehen, die das Reinigen unterstützt. Die jeweilige Läufereinheit kann am Rahmen translatorisch verschoben werden, wobei die Richtung der Verschiebung hier als Laufrichtung bezeichnet wird. Wenngleich es im Rahmen der Erfindung denkbar wäre, dass die Laufrichtung lokal unterschiedlich verläuft und somit die Läufereinheit entlang einer bspw. leicht gekrümmten Bahn translatorisch verschiebbar ist, ist es bevorzugt, dass sie geradlinig entlang der Laufrichtung verschiebbar ist. Das heißt, die Laufrichtung ist bevorzugt in allen Teilen des Rahmens gleich. Um die translatorische Verschiebung zu unterstützen, kann der Rahmen eine Führungsstruktur aufweisen, die mit einer entsprechenden Führungsstruktur der Läufereinheit zusammenwirkt. Insbesondere kann die Läufereinheit wenigstens einen Wälzkörper, zum Beispiel eine Rolle, aufweisen, die auf einer Führungsschiene des Rahmens abrollt. In einer bevorzugten Ausführungsform ist die Läufereinheit beim translatorischen Verschieben zwangsgeführt.

Die jeweilige Läufereinheit erstreckt sich quer zur Laufrichtung in einer Richtung, welche hier und im Folgenden als Breitenrichtung bezeichnet wird. Das heißt die Laufrichtung und die Breitenrichtung verlaufen im rechten Winkel zueinander. Ohne hierauf beschränkt zu sein, kann in eingebautem Zustand die Laufrichtung insbesondere parallel zur Hochachse der Landmaschine ausgerichtet sein, so dass die Breitenrichtung horizontal ausgerichtet ist. Bevorzugt entspricht eine Ausdehnung der Läufereinheit in Breitenrichtung wenigstens dem dreifachen oder mehr ihrer Ausdehnung in Laufrichtung. Außerdem entspricht die Ausdehnung in Breitenrichtung bevorzugt wenigstens 90 % oder mehr einer Ausdehnung des Siebs. Somit kann die Läufereinheit das Sieb in Breitenrichtung jeweils vollständig oder nahezu vollständig abdecken. In Laufrichtung entspricht die Ausdehnung der Läufereinheit bevorzugt höchstens 25 % oder weniger der Ausdehnung des Siebs. Das heißt es wird bevorzugt nur ein vergleichsweise kleiner Teil des Siebs abgedeckt, so dass der Kühlluftstrom nur wenig gestört wird.

Des Weiteren weist die Baugruppe eine Antriebseinheit auf, welche einen Aktor aufweist und durch welche wenigstens eine Läufereinheit in der Laufrichtung oszillierend antreibbar ist. Wenngleich hier von "einem" Aktor die Rede ist, wäre es denkbar, dass die Antriebseinheit eine Mehrzahl von Aktoren aufweist. Bevorzugt ist genau ein Aktor vorgesehen. Durch die Antriebseinheit ist wenigstens eine Läufereinheit derart antreibbar, dass sie sich in der Laufrichtung oszillierend bewegt, also hin und her bewegt. In zeitlicher Abfolge bewegt sich die entsprechende Läufereinheit also zunächst in einer Richtung, dann in Gegenrichtung etc. Im Falle mehrerer Läufereinheiten gilt dies bevorzugt für jede Läufereinheit. Die zeitliche Abfolge der einzelnen Bewegungsteile kann unterschiedlich gewählt werden, zum Beispiel mit oder ohne zwischenzeitlichen Stillstand der Läufereinheit. Bevorzugt ist der Bewegungsbereich dabei so gewählt, dass die Läufereinheit in Laufrichtung wenigstens 90 % oder mehr des Siebs überstreicht. Somit kann auch bei einer vergleichsweise geringen Ausdehnung der Läufereinheit eine vollständige oder nahezu vollständige Reinigung erreicht werden.

Erfindungsgemäß weist die Antriebseinheit einen Kopplungshebel auf, der um eine bezüglich des Rahmens stationäre Kopplungs-Schwenkachse schwenkbar ist und der wenigstens indirekt antriebsübertragend an den Aktor gekoppelt ist, wobei wenigstens ein Läuferarm des Kopplungshebels wenigstens indirekt antriebsübertragend an eine Läufereinheit gekoppelt ist. Die Kopplungs-Schwenkachse kann durch ein geeignetes Kopplungs-Schwenklager realisiert sein. Sie verläuft bevorzugt in Durchtrittsrichtung und/oder senkrecht zur Siebebene und/oder senkrecht zur Laufrichtung und zur Breitenrichtung. Der Kopplungshebel stellt eine einfache, aber effektive mechanische Verbindung her, durch die eine Antriebsbewegung des Aktors, direkt oder indirekt über wenigstens ein zwischengeordnetes Element, auf die jeweilige Läufereinheit übertragen werden kann. Dabei weist der Kopplungshebel einen Läuferarm auf, der direkt oder indirekt antriebsübertragend an die Läufereinheit gekoppelt ist. Somit wird die oszillierende translatorische Bewegung der Läufereinheit zumindest mittelbar durch den genannten Läuferarm geführt. Der Läuferarm ist Teil des Kopplungshebels und daher um die Kopplungs-Schwenkachse schwenkbar. Bevorzugt ist die Antriebseinheit dazu eingerichtet, den Kopplungshebel - einschließlich des Läuferarms - oszillierend um die Kopplungs-Schwenkachse zu schwenken. Mit der Antriebseinheit wird daher mittels der Schwenkbewegung des Kopplungshebels die translatorische Bewegung der Läufereinheit bewirkt.

Mittels des Läuferarms lässt sich eine weiträumige Bewegung der Läufereinheit erzeugen, ohne dass hierzu notwendigerweise eine weiträumige Bewegung des Aktors notwendig wäre. Daher kann der notwendige Bauraum vergleichsweise gering sein. Dabei kann die Siebfläche, ohne das Sieb unterteilen zu müssen, mittels der Laufeinheit im Wesentlichen vollständig abgefahren werden.

Um einen großen Bewegungsbereich zu realisieren, kann der Läuferarm z.B. eine Länge aufweisen, die zwischen 50% und 100% einer Diagonalen des Siebs entspricht. Der jeweilige Läuferarm erstreckt sich bevorzugt einerseits entlang der Siebebene, also entweder auf der Umgebungsseite oder der Kühlerseite. Die Schwenkbewegung des Läuferarms wird in die translatorische Bewegung der Läufereinheit übersetzt. Hierzu existieren verschiedene Möglichkeiten, von denen einige nachfolgend noch besprochen werden.

Bevorzugt weist die Reinigungseinheit eine Absaug-Läufereinheit auf, die eine zur Verbindung mit einer Vakuumquelle vorgesehene Saugeinheit umfasst, die umgebungsseitig der Siebfläche angeordnet ist. Die Absaug-Läufereinheit stellt eine Läufereinheit mit den oben erläuterten Eigenschaften dar. Sie weist eine Saugeinheit auf, die zur Verbindung mit einer Vakuumquelle vorgesehen ist. Sie kann über einen flexiblen Verbindungsschlauch mit der Vakuumquelle verbindbar sein. Die Vakuumquelle, welche auch als Unterdruckquelle bezeichnet werden kann, kann ebenfalls Teil der Landmaschine sein. Die Saugeinheit ist umgebungsseitig der Siebebene angeordnet, was auch für die Absaug-Läufereinheit insgesamt gelten kann. Die Saugeinheit dient dazu, Pflanzenteile und andere Verschmutzungen vom Sieb abzusaugen. Sie erstreckt sich quer zur Laufrichtung in der Breitenrichtung. Bevorzugt entspricht einer Ausdehnung der Saugeinheit in Breitenrichtung wenigstens dem dreifachen oder mehr ihrer Ausdehnung in Laufrichtung. Außerdem entspricht die Ausdehnung in Breitenrichtung bevorzugt wenigstens 90 % oder mehr einer Ausdehnung des Siebs. In Laufrichtung entspricht die Ausdehnung der Saugeinheit bevorzugt höchstens 25 % oder weniger der Ausdehnung des Siebs. Die Saugeinheit kann eine Saugabdeckung oder ein Sauggehäuse aufweisen, welches zur Siebebene hin geöffnet, ansonsten aber wenigstens überwiegend geschlossen ist. Diese Saugabdeckung definiert den Bereich, in welchem eine effektive Saugwirkung ausgeübt werden kann.

Bevorzugt ist ein sich umgebungsseitig der Siebfläche erstreckender Absaug-Läuferarm des Kopplungshebels wenigstens indirekt antriebsübertragend an die Absaug-Läufereinheit gekoppelt. Der Absaug-Läuferarm ist Teil des Kopplungshebels und stellt einen Läuferarm mit den oben erläuterten Eigenschaften dar. Er erstreckt sich umgebungsseitig der Siebebene, also in einem Bereich, der nicht vor Verunreinigungen geschützt werden muss. Die Anordnung und der Betrieb des Läuferarms erhöhen somit nicht das Risiko eines Eindringens von Verunreinigungen in den kühlerseitigen Bereich. Die Schwenkbewegung des Absaug-Läuferarms wird in die translatorische Bewegung der Absaug-Läufereinheit übersetzt.

Außer der Saugeinheit kann die Absaug-Läufereinheit weitere Elemente aufweisen, insbesondere wenigstens ein Bürstenelement. Das Bürstenelement kann einerseits die Saugwirkung verstärken, indem es einen in Durchtrittsrichtung gegebenen Abstand zwischen Saugeinheit und Sieb überbrückt. Daher kann ein Bürstenelement insbesondere randseitig der Saugeinheit angeordnet sein, z.B. am Rand der o.g. Saugabdeckung. Vor allem kann ein Bürstenelement dazu dienen, mechanisch auf am Sieb befindliche Verunreinigungen einzuwirken und diese zu lösen, so dass sie von der Saugeinheit besser abgesaugt werden können.

Bevorzugt ist die Kopplungs-Schwenkachse zum Siebraum versetzt angeordnet. Das heißt, die Kopplungs-Schwenkachse ist weder im Siebraum angeordnet, noch ist sie in Durchtrittsrichtung fluchtend mit diesem angeordnet. Somit werden weder die Struktur des Siebs noch der Kühlluftstrom durch ein Schwenklager oder andere Komponenten der Kopplungs-Schwenkachse gestört. Die Kopplungs-Schwenkachse kann in Laufrichtung zum Siebraum versetzt sein, bevorzugt ist sie in Breitenrichtung zum Siebraum versetzt. Bevorzugt ist es ebenfalls, dass die Kopplungs-Schwenkachse an einer dem Siebraum gegenüberliegenden Außenseite des Rahmens angeordnet ist. Der Rahmen umgibt den Siebraum ganz oder teilweise, insofern ist der Siebraum auf einer "Innenseite" angeordnet. Die gegenüberliegende Seite des Rahmens wird hier und nachfolgend als "Außenseite" bezeichnet. Eine derartige außenseitige Anordnung vermeidet mögliche Abdichtungsprobleme im Zusammenhang mit der Kopplungs-Schwenkachse.

Aufgrund der Stärke des Kühlluftstroms ist ein effektives Absaugen des Siebs von der Umgebungsseite aus schwierig oder gar unmöglich, wenn die Saugeinheit gegen den Kühlluftstrom arbeiten muss. Es ist daher sinnvoll oder notwendig, den Kühlluftstrom lokal dort abzuschirmen, wo die Saugeinheit arbeitet. Dies kann über ein sog. Abschirmelement erfolgen. Gemäß einer bevorzugten Ausführungsform weist die Reinigungseinheit eine Abschirm-Läufereinheit auf, mit einem flächigen Abschirmelement, welches der Saugeinheit gegenüberliegend kühlerseitig der Siebfläche angeordnet ist. In einer besonders bevorzugten Ausführungsform ist eine Bewegung der Abschirm-Läufereinheit entlang der Laufrichtung durch die Antriebseinheit an die Bewegung der Absaug-Läufereinheit zwangsgekoppelt. Bei eingebautem Sieb ist dieses zwischen der umgebungsseitigen Saugeinheit und dem kühlerseitigen Abschirmelement zwischengeordnet. Das Abschirmelement, welches zum Beispiel durch ein Blechteil gebildet sein kann, schirmt den Kühlluftstrom zumindest teilweise ab, so dass die Saugeinheit effektiv arbeiten kann. Ein Querschnitt des Abschirmelements entspricht bevorzugt wenigstens einem Querschnitt der Saugeinheit, oder gegebenenfalls kann er auch etwas größer sein. Für eine effektive Abschirmung sollten die Bewegungen von Abschirmelement und Saugeinheit synchron erfolgen. Dies wird bei dieser Ausführungsform dadurch erreicht, dass die Bewegung der Abschirm-Läufereinheit durch die Antriebseinheit an die Bewegung der Absaug-Läufereinheit zwangsgekoppelt ist. Dementsprechend wird die Abschirm-Läufereinheit auch durch die Antriebseinheit angetrieben.

Grundsätzlich kann die Abschirm-Läufereinheit in unterschiedlicher Weise angetrieben werden. Bevorzugt weist der Kopplungshebel einen Abschirm-Läuferarm auf, der wenigstens indirekt antriebsübertragend an die Abschirm-Läufereinheit gekoppelt ist. Der Abschirm-Läuferarm erstreckt sich bevorzugt kühlerseitig der Siebebene, wodurch die Kopplung an die Abschirm-Läufereinheit optimal realisiert werden kann. Sofern auch ein oben beschriebener Absaug-Läuferarm vorhanden ist, ist der Abschirm-Läuferarm mit diesem drehfest verbundenen, das heißt insbesondere drehfest bezüglich der Kopplungs-Schwenkachse. Der Absaug-Läuferarm und der Abschirm-Läuferarm könnten einstückig ausgebildet oder direkt miteinander verbunden sein. Bevorzugt sind sie über einen Achsstift verbunden, der koaxial zur Kopplungs-Schwenkachse angeordnet und schwenkbar gegenüber dem Rahmen gelagert ist. Es ist bevorzugt, dass sowohl die Absaug-Läufereinheit als auch die Abschirm-Läufereinheit über einen zugehörigen Läuferarm angetrieben werden. Die Antriebsübertragung vom Absaug-Läuferarm zur Absaug-Läufereinheit kann in gleicher Weise erfolgen wie die Antriebsübertragung vom Abschirm-Läuferarm zur Abschirm-Läufereinheit. Es können aber auch unterschiedliche Prinzipien zugrunde liegen.

Bevorzugt ist wenigstens eine Läufereinheit über Seitenabschnitte bezüglich der Breitenrichtung beiderseits endseitig am Rahmen gelagert. Das heißt die Läufereinheit ist an zwei in Breitenrichtung gegenüberliegenden Bereichen des Rahmens verschiebbar gelagert, wobei ein Seitenabschnitt der Läufereinheit einerseits und der andere Seitenabschnitt der Läufereinheit andererseits am Rahmen gelagert ist. In den gegenüberliegenden Bereichen sind dafür bevorzugt Schienen vorgesehen. Hierdurch ist eine stabile Führung gegeben und etwa ein ungewolltes Verdrehen der Läufereinheit wird verhindert. Ein zwischen den Seitenabschnitten liegender Mittelabschnitt der Läufereinheit hat keinen direkten Kontakt zum Rahmen, ist also am Rahmen nur über die beiderseitigen Endbereiche gestützt und geführt, sowie unter Umständen auch über die Antriebseinheit. Es gibt somit umgebungsseitig oder kühlerseitig des Siebraums keine rahmenseitigen Führungsstrukturen. Derartige Führungsstrukturen würden zum einen den Luftstrom behindern. Zum anderen könnten sie mögliche Lücken oder Schwachstellen hinsichtlich des Eindringens von Verunreinigungen bilden. Durch die beiderseitig endseitige Führung wird dies verhindert. Vorteilhaft kann die Antriebseinheit antriebsübertragend an den Mittelabschnitt gekoppelt sein. Das heißt die mechanische Verbindung zwischen Antriebseinheit und Läufereinheit erfolgt über den Mittelabschnitt. Insbesondere kann der zur Läufereinheit gehörige Läuferarm direkt oder indirekt an den Mittelabschnitt gekoppelt sein.

Die Schwenkbewegung eines Läuferarms muss in die translatorische Bewegung der zugehörigen Läufereinheit übersetzt werden. Dies kann in unterschiedlicher Weise erfolgen. Eine Ausführungsform sieht vor, dass wenigstens ein Läuferarm und eine diesem zugeordnete Läufereinheit über ein Verschiebungselement und ein Führungselement zusammenwirken, welches Führungselement eine im Winkel zur Laufrichtung verlaufende Verschiebungsbahn definiert, entlang welcher das Verschiebungselement verschiebbar geführt ist. Die zugeordnete oder zugehörige Läufereinheit ist selbstverständlich diejenige, mit der der jeweilige Läuferarm antriebsübertragend gekoppelt ist, also zum Beispiel im Falle des Absaug-Läuferarms die Absaug-Läufereinheit. Das Verschiebungselement kann entlang des Führungselements geführt verschoben werden. Dabei kann das Verschiebungselement zum Beispiel am Führungselement entlang gleiten oder es kann ein oder mehrere Wälzelemente aufweisen, die am Verschiebungselement abrollen. Das Führungselement bildet mit dem Verschiebungselement einen teilweisen Formschluss, der eine Bewegung mit genau einem translatorischen Freiheitsgrad ermöglicht. Zusätzlich kann das Verschiebungselement allerdings gegenüber dem Führungselement rotatorisch verdrehbar sein. Die durch das Führungselement definierte Führungsbahn kann insbesondere gerade verlaufen. Es sind aber auch andere Verläufe, zum Beispiel bogenförmige oder abgewinkelte Verläufe denkbar. Insbesondere kann das Führungselement eine Führungskulisse aufweisen, in welche das Verschiebungselement eingreift.

Entsprechend einer Ausgestaltung kann der Läuferarm das Verschiebungselement aufweisen und das Führungselement kann stationär an der Läufereinheit angeordnet sein. Gemäß einer anderen Ausgestaltung weist die Läufereinheit das Verschiebungselement auf und das Führungselement ist stationär am Läuferarm angeordnet. Beide genannten Ausgestaltungen können vorteilhaft sein. Es ist auch möglich, die beiden Ausgestaltungen zu kombinieren. So könnte ein Läuferarm (zum Beispiel der Absaug-Läuferarm) ein Verschiebungselement aufweisen und die zugehörige Läufereinheit ein Führungselement, während der andere Läuferarm (zum Beispiel der Absaug-Läuferarm) ein Führungselement aufweist und die zugehörige Läufereinheit ein Verschiebungselement.

Eine weitere Möglichkeit besteht darin, dass wenigstens ein Läuferarm teleskopierend ausgebildet und über ein Schwenklager mit der zugehörigen Läufereinheit verbunden ist. Das Schwenklager, welches als Läuferarm-Schwenklager bezeichnet werden kann, ist stationär an der Läufereinheit angeordnet. Es kann einfach ausgestaltet sein, zum Beispiel als Gleitlager. Während das Schwenklager die relative Rotation zwischen Läuferarm und Läufereinheit ausgleicht, wird der sich ändernde Abstand zwischen Schwenklager und Kopplungs-Schwenkachse durch die teleskopierende Bauweise des Läuferarms ausgeglichen. Der Läuferarm kann zwei oder mehr Armelement aufweisen, die ineinander schiebbar sind. Es versteht sich, dass das Teleskopieren und die damit einhergehende Längenänderung passiv erfolgen und aus der Schwenkbewegung des Kopplungshebels einerseits und der Führung der Läufereinheit am Rahmen andererseits resultieren.

Die Einleitung eines Drehmoments in den Kopplungshebel, aus welcher die Schwenkbewegung desselben resultiert, kann in unterschiedlicher Weise erfolgen. Zum Beispiel könnte ein rotatorischer Aktor koaxial zur Kopplungs-Schwenkachse angreifen. Es könnte auch ein Zahnrad drehfest mit dem Kopplungshebel verbunden sein, auf das der Aktor über ein weiteres Zahnrad oder eine Zahnstange einwirkt. Eine bevorzugte Ausgestaltung sieht allerdings vor, dass der Kopplungshebel einen drehfest mit dem wenigstens einen Läuferarm verbundenen Aktorarm aufweist, der wenigstens indirekt an den Aktor gekoppelt ist. Die drehfeste Verbindung der genannten Läuferarme kann durch eine einstückige Ausgestaltung realisiert sein. In einer ebenfalls bevorzugten Ausführungsform kann sich aber bei der drehfesten Verbindung der genannten Läuferarme auch um zwei separat vorgefertigte Bauteile handeln. Diese können direkt oder zum Beispiel über einen oben genannten Achsstift miteinander verbunden sein.

Vorteilhaft ist der Aktor als Linearaktor ausgebildet. Er kann zum Beispiel als elektrischer, hydraulischer, elektrohydraulischer oder pneumatischer Linearaktor ausgebildet sein. Im Idealfall entsprechen die Endpositionen des Linearaktors den Endpositionen der wenigstens einen Läufereinheit, so dass der Linearaktor maximal kontrahiert und expandiert werden kann. Falls dies nicht der Fall ist, kann der Linearaktor gesteuert werden, indem mittels Sensoren, zum Beispiel Kontaktsensoren, die Endpositionen der Läufereinheit detektiert werden. Derartige Sensoren können außenseitig des Rahmens angeordnet sein. Insbesondere können sie mit dem Aktorarm zusammenwirken, so dass sie dessen Position stellvertretend für die Position der Läufereinheit detektieren.

Der Linearaktor kann in unterschiedlicher Weise mit dem Kopplungshebel zusammenwirken, wobei die lineare Bewegung des Linearaktors in eine Rotationsbewegung des Kopplungshebels übersetzt wird. Hierfür sind unterschiedliche mechanische Lösungen denkbar und dem Prinzip nach bekannt. Bevorzugt ist der Linearaktor einerseits schwenkbar mit dem Rahmen verbunden sowie andererseits schwenkbar mit dem Aktorarm verbunden. Das heißt der Linearaktor ist über ein erstes Aktor-Schwenklager mit dem Rahmen verbunden und über ein zweites Aktor-Schwenklager mit dem Aktorarm. Die genannten Schwenklager können am Rahmen sowie am Aktorarm stationär angeordnet sein. Durch die schwenkbaren Verbindungen kann der Linearaktor der Schwenkbewegung des Kopplungshebels folgen. Bei geeigneter Auslegung des Linearaktors kann der Abstand des zweiten Aktor-Schwenklagers von der Kopplungs-Schwenkachse - und somit die effektive Länge des Aktorarms - nur einen Bruchteil der Länge des Läuferarms betragen, zum Beispiel höchstens 20% oder höchstens 10%. Ein Vorteil des Zusammenwirkens von Linearaktor und Aktorarm kann darin bestehen, dass die Linearbewegung des Aktors über die Schwenkbewegung von Aktorarm und Absaug-Läuferarm oder Abschirm-Läuferarm in eine weitere Linearbewegung der Läufereinheit übersetzt wird. Hierdurch kann die Bewegung der Läufereinheit, wenn auch nicht exakt, aber doch in etwa proportional zur Bewegung des Linearaktors verlaufen. Das heißt bei konstanter Bewegungsgeschwindigkeit des Linearaktors ergibt sich eine annähernd konstante Bewegungsgeschwindigkeit der Läufereinheit. Letztere sorgt wiederum dafür, dass sämtliche Bereiche des Siebs zumindest ähnlich gründlich gereinigt werden.

Eine Ausgestaltung sieht vor, dass wenigstens ein Läuferarm, bevorzugt der Abschirm-Läuferarm, durch eine Rahmen-Durchgangsöffnung im Rahmen hindurchgeführt ist. Dies hängt damit zusammen, dass die Koppel-Schwenkachse bevorzugt in Breitenrichtung außerhalb des Rahmens angeordnet ist. Da der Rahmen in Durchtrittsrichtung aus Stabilitätsgründen eine gewisse Tiefe aufweisen sollte, ist es konstruktiv schwierig, jeden der Läuferarme vorderseitig oder rückseitig am Rahmen vorbeizuführen. Dies ist für den Absaug-Läuferarm unter Umständen gut realisierbar, nicht aber für den Abschirm-Läuferarm. Insbesondere dieser kann durch die genannte Rahmen-Durchgangsöffnung hindurch von der Außenseite des Rahmens zur Innenseite geführt sein. Da die Rahmen-Durchgangsöffnung prinzipiell ein Eindringen von Partikeln ermöglicht, sollten Ihre Abmessungen gering gehalten werden, wobei sie allerdings eine ungehinderte Schwenkbewegung des Läuferarms zulassen muss. Daher ist es besonders bevorzugt, dass die Kopplungs-Schwenkachse nahe dem Rahmen angeordnet ist. Dadurch ist ein im Bereich des Rahmens beim Schwenken des Kopplungshebels von diesem durchlaufener Schwenkwinkel klein, so dass die erforderliche Rahmen-Durchgangsöffnung entsprechend klein ausgebildet sein kann.

Die Rahmen-Durchgangsöffnung stellt, wenngleich sie vergleichsweise geringe Abmessungen aufweisen kann, eine mögliche Schwachstelle hinsichtlich des Eindringens von Verunreinigungen dar. Daher ist es weiterhin bevorzugt, dass ein Schieberelement in Laufrichtung verschiebbar am Rahmen angeordnet ist, welches die Rahmen-Durchgangsöffnung teilweise abdeckt und eine Schieber-Durchgangsöffnung aufweist, durch welche der Läuferarm hindurchgeführt ist. Das Schieberelement ist zum Abdichten des Rahmens im Bereich der Rahmen-Durchgangsöffnung vorgesehen. Das Schieberelement kann beispielsweise durch ein flaches Blechteil oder Kunststoffteil gebildet sein. Es ist am Rahmen in Laufrichtung verschiebbar, wofür der Rahmen seitlich der Rahmen-Durchgangsöffnung einfache Führungselemente aufweisen kann, die mit dem Schieberelement eingreifen. Vorzugsweise ist das Schieberelement mittels der Führungselemente zwangsgeführt. Das Schieberelement kann innenseitig, das heißt dem Siebraum zugewandt, angeordnet sein oder außenseitig, das heißt auf einer dem Siebraum abgewandten Seite des Rahmens.

Zum einen deckt das Schieberelement die Rahmen-Durchgangsöffnung bevorzugt wenigstens überwiegend ab, zum anderen weist es weiterhin bevorzugt die Schieber-Durchgangsöffnung auf, durch die der Läuferarm hindurchgeführt ist. Sofern das Schieberelement bezüglich des Rahmens verschiebbar ist, kann es vom Läuferarm bei dessen Schwenkbewegung verschoben, insbesondere mitgenommen, werden, ohne diese Bewegung zu behindern. Dies hat zur Folge, dass die Ausdehnung der Schieber-Durchgangsöffnung in Laufrichtung nicht dem gesamten Bewegungsbereich des Läuferarms entsprechen muss, sondern im Wesentlichen einer oder nur unwesentlich größer als einer Ausdehnung des Läuferarms entsprechen muss, im Gegensatz zur Rahmen-Durchgangsöffnung. Bevorzugt weist die Schieber-Durchgangsöffnung daher in Laufrichtung eine geringere Ausdehnung auf als die Rahmen-Durchgangsöffnung. Diese kann sich am Querschnitt des Läuferarms in der Ebene des Schieberelements bemessen, bezogen auf die Endposition des Läuferarms. Somit bleiben zwischen Schieber-Durchgangsöffnung und Läuferarm nur (sehr) geringe Zwischenräume, so dass der Durchtrittsquerschnitt für Schmutzpartikel gegenüber einer Ausführungsform ohne Schieberelement auf einen Bruchteil reduziert werden kann. Aufgrund der sehr geringen Ausdehnung der Schieber-Durchgangsöffnung kann weiterhin nur ein sehr geringer Anteil an Kühlluft durch die Rahmen-Durchgangsöffnung oder die Schieber-Durchgangsöffnung verloren gehen. Die Kühlersieb-Baugruppe beeinflusst daher die Kühlleistung nahezu nicht.

Trotz der regelmäßigen Reinigung durch Absaugen und/oder Abbürsten des Siebes kann es von Zeit zu Zeit notwendig sein, dieses intensiver und/oder effektiver zu reinigen. Daher ist es besonders bevorzugt, dass das Sieb dem Rahmen reversibel entnehmbar vorgesehen ist. Dafür ist es bevorzugt, dass der Rahmen wenigstens eine seitliche Einführöffnung aufweist, durch die wenigstens ein Siebelement des Siebes in den Siebraum einbringbar, beispielsweise einschiebbar, ist. Die Einführöffnung ermöglicht das Entnehmen und Wiedereinsetzen des Siebes auf sehr einfache Art und Weise. Dadurch ist das Reinigen des Siebes auch außerhalb der Baugruppe möglich, beispielsweise mit einem Hochdruckreiniger.

Das Sieb kann aus einem einzigen Siebelement bestehen oder eine Mehrzahl von Siebelementen aufweisen. Die Einführöffnung ist seitlich am Rahmen angeordnet. Sie ist so bemessen, dass das Siebelement durch sie in den Siebraum hinein oder aus diesem heraus geführt werden kann. Das Siebelement kann so ausgebildet sein, dass es in eingesetztem Zustand die Einführöffnung verschließt, um ein Eindringen von Erntegut- oder Schmutzpartikel und/oder ein Entweichen von Kühlluft durch die Einführöffnung, zu verhindern. Die Bewegung des Siebelements verläuft beim Einsetzen oder Herausnehmen entlang der Siebfläche, so dass es zu keiner Kollision mit der auf der Umgebungsseite angeordneten Saugeinheit, dem Absaug-Läuferarm, dem auf der Kühlerseite angeordneten Abschirmelement oder dem Abschirm-Läuferarm kommen kann. Es kann für jedes Siebelement eine eigene Einführöffnung vorgesehen sein. Bevorzugt ist die Einführöffnung in Breitenrichtung seitlich angeordnet ist und erstreckt sich in Laufrichtung.

Insbesondere kann der Rahmen zwei in Laufrichtung zueinander versetzte Einführöffnungen aufweisen, wobei die Kopplungs-Schwenkachse bezüglich der Laufrichtung zwischen den Einführöffnungen angeordnet ist. Dies ist insbesondere dann notwendig, wenn der Abschirm-Läuferarm im Bereich der Kopplungs-Schwenkachse mit dem Absaug-Läuferarm verbunden ist. Eine entsprechende Verbindung, zum Beispiel über einen Achsstift, muss von der Umgebungsseite zur Kühlerseite führen, was potenziell zu einer Kollision mit einem Siebelement führen könnte. Ist die Kopplungs-Schwenkachse allerdings zwischen zwei Einführöffnungen angeordnet, können die zugehörigen Siebelemente problemlos beiderseits vorbeigeführt werden.

Durch die Erfindung wird außerdem eine Landmaschine zur Verfügung gestellt. Diese weist eine, insbesondere eine solche, Kühlersieb-Baugruppe auf, mit einem Rahmen, der wenigstens teilweise einen Siebraum umgibt, durch welchen Kühlluft in einer Durchtrittsrichtung von einer Umgebungsseite zu einer Kühlerseite hindurchführbar ist und in dem ein sich entlang einer Siebfläche erstreckendes Sieb aufnehmbar ist, mit einer Reinigungseinheit zum Reinigen des Siebs, aufweisend wenigstens eine Läufereinheit, die am Rahmen entlang einer Laufrichtung translatorisch verschiebbar gelagert ist und sich quer zur Laufrichtung in einer Breitenrichtung erstreckt, sowie mit einer Antriebseinheit, welche einen Aktor aufweist und durch welche wenigstens eine Läufereinheit in der Laufrichtung oszillierend antreibbar ist.

Erfindungsgemäß weist die Antriebseinheit einen Kopplungshebel auf, der um eine bezüglich des Rahmens stationäre Kopplungs-Schwenkachse schwenkbar ist und der wenigstens indirekt antriebsübertragend an den Aktor gekoppelt ist, wobei wenigstens ein Läuferarm des Kopplungshebels wenigstens indirekt antriebsübertragend an eine Läufereinheit gekoppelt ist.

Die Landmaschine weist bevorzugt eine Komponente wie beispielsweise einen Antriebsmotor und/oder ein Getriebe auf, die während des Betriebs gekühlt werden muss. Die Kühlersieb-Baugruppe ist dafür vorgesehen, einen Kühlluftstrom, welcher einem Kühler zum Kühlen der Komponente zugeführt wird, zu reinigen.

Da ein aus Erntegutpartikeln und -Flüssigkeiten gebildeter Schneidnebel lediglich im Feldbetrieb, also während der Ernte, entsteht, ist es bevorzugt, die Reinigung des Siebes durch die oszillierende Bewegung des Kopplungshebels nur im Feldbetrieb durchzuführen.

Die genannten Begriffe wurden bereits mit Bezug auf die erfindungsgemäße Kühlersieb-Baugruppe erklärt und werden daher nicht nochmals erläutert. Bevorzugte Ausführungsformen der erfindungsgemäßen Landmaschine entsprechen denen der erfindungsgemäßen Kühlersieb-Baugruppe.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine schematische Seitenansicht einer erfindungsgemäßen Landmaschine;
- Fig. 2: eine Vorderansicht einer ersten Ausführungsform einer erfindungsgemäßen Kühlersieb-Baugruppe;
- Fig. 3 und 4: perspektivische Ansichten der Kühlersieb-Baugruppe aus Fig.2;
- Fig. 5: eine Schnittdarstellung eines Details der Kühlersieb-Baugruppe aus Fig.2;
- Fig. 6A, 6B: perspektivische Detailansichten der Kühlersieb-Baugruppe aus Fig.2;
- Fig. 7: eine perspektivische Ansicht einer zweiten Ausführungsform einer erfindungsgemäßen Kühlersieb-Baugruppe mit zwei Siebelementen;
- Fig. 8: eine perspektivische Ansicht eines Teils einer dritten Ausführungsform einer erfindungsgemäßen Kühlersieb-Baugruppe; sowie
- Fig. 9: eine Vorderansicht eines Teils einer vierten Ausführungsform einer erfindungsgemäßen Kühlersieb-Baugruppe.

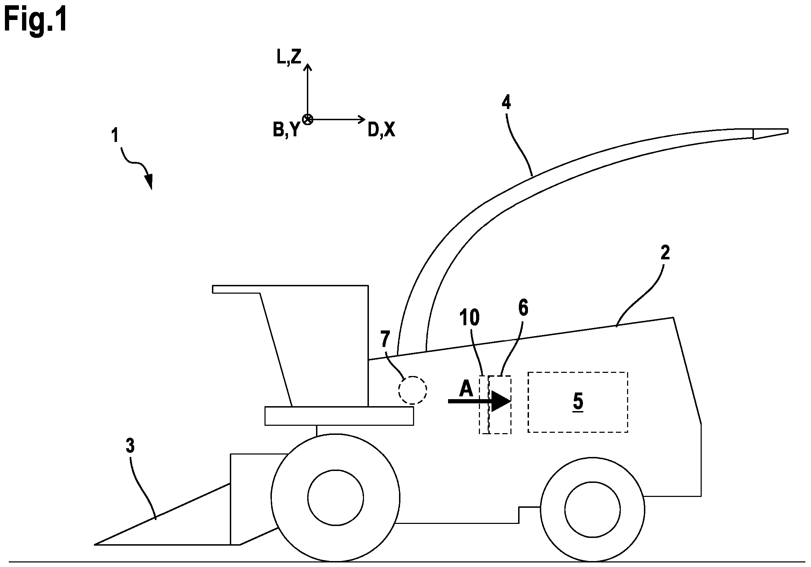

Fig. 1 zeigt in stark schematisierter Form eine erfindungsgemäße Landmaschine 1, in diesem Fall einen Feldhäcksler. Bezüglich einer Längsachse X vorderseitig ist an einem Fahrzeugkörper 2 ein Erntevorsatz 3, zum Beispiel ein Maisgebiss, angeordnet. Das mit dem Erntevorsatz 3 aufgenommene Erntegut wird in mehreren Schritten zerkleinert und verarbeitet, bevor es durch einen Auswurfbogen 4 ausgeworfen wird, zum Beispiel auf ein Begleitfahrzeug (nicht dargestellt). Die Landmaschine 1 weist einen Antriebsmotor 4 auf, der die Antriebsleistung für ein Fahrwerk, für den Erntevorsatz 3 sowie für weitere Komponenten zur Verfügung stellt. Der Antriebsmotor 4 sowie weitere Systeme müssen während des Betriebs gekühlt werden. Dabei wird Wärme an ein Kühlmittel eines nicht dargestellten Kühlkreislaufs abgegeben, wobei das Kühlmittel die aufgenommene Wärme wiederum in einem Kühler 6 an Kühlluft A abgeben kann, die aus der Umgebung aufgenommen und am Kühler 6 vorbeigeführt wird. Dies wird durch ein nicht dargestelltes Sauggebläse unterstützt. Um zu verhindern, dass der Kühler 6 durch Erntegutteile und andere Verunreinigungen in der Kühlluft A verstopft wird, ist dem Kühler 6 eine Kühlsieb-Baugruppe 10 vorgeordnet. Die Kühlluft A durchquert die Kühlsieb-Baugruppe 10 in einer Durchtrittsrichtung D, die in dieser Ausführungsform mit der Längsachse X übereinstimmt. Eine Laufrichtung L stimmt mit einer Hochachse Z überein und eine Breitenrichtung B mit einer Querachse Y. In anderen Ausführungsformen muss diese Übereinstimmung allerdings nicht gegeben sein.

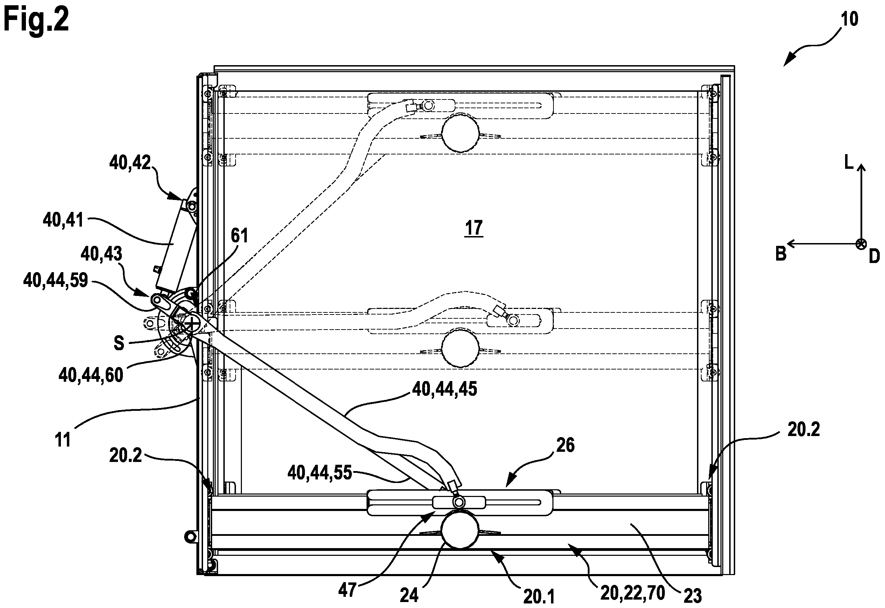

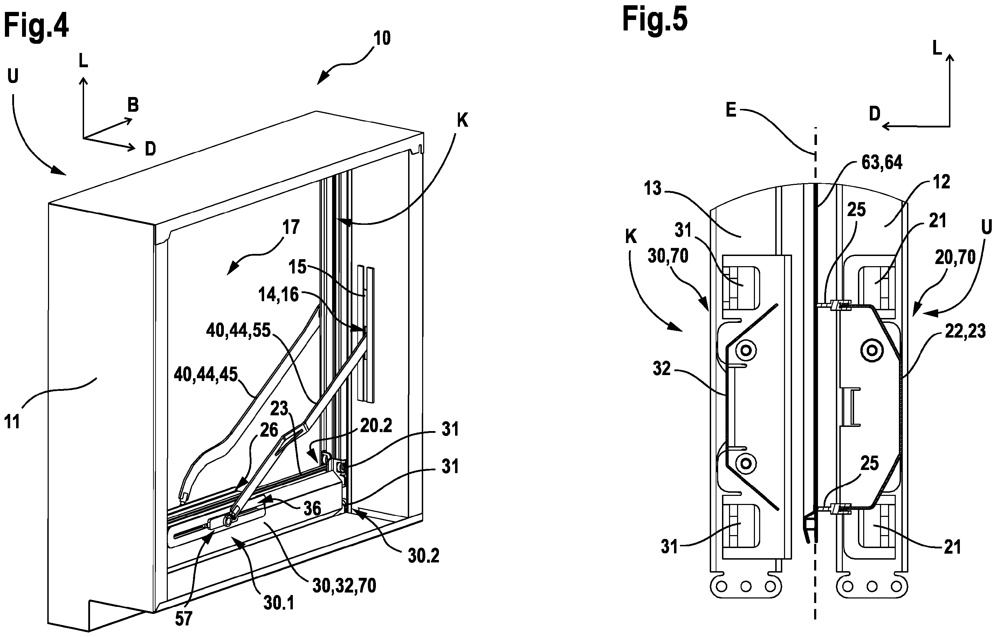

Fig.2-6B zeigen eine erste Ausführungsform einer erfindungsgemäßen Kühlersieb-Baugruppe 10. Diese weist einen Rahmen 11 auf, der aus Stahlblech gefertigt ist. Er umgibt umlaufend einen Siebraum 17 der zur Aufnahme eines Siebs 63 vorgesehen ist. Das Sieb 63 ist lediglich in Fig.5 dargestellt, zusammen mit einer Siebfläche oder Siebebene E, entlang der sich das Sieb 63 in eingesetztem Zustand erstreckt. Die Siebebene E verläuft parallel zur Laufrichtung L und zur Breitenrichtung B. Bei der dargestellten Ausführungsform weist der Siebraum 17 einen annähernd quadratischen Querschnitt auf, was insbesondere in der Vorderansicht in Fig. 2 erkennbar ist. Durch den Siebraum 17 kann Kühlluft A in der Durchtrittsrichtung D von einer Umgebungsseite U zu einer Kühlerseite K hindurchtreten. Bei eingesetztem Sieb 63 werden wie bereits beschrieben Verunreinigungen in der Siebebene E aus der Kühlluft A herausgefiltert. Um ein Verstopfen des Siebs 63 zu verhindern, ist eine Reinigungseinheit 70 vorgesehen, mit einer Absaug-Läufereinheit 20 und einer Abschirm-Läufereinheit 30. Die Absaug-Läufereinheit 20 ist am Rahmen 11 entlang der Laufrichtung L translatorisch verschiebbar gelagert. Hierzu weist der Rahmen 11 ein paar von ersten Führungsschienen 12 auf, die parallel zur Laufrichtung L verlaufen und bezüglich der Breitenrichtung B einander gegenüber liegen. An jedem von zwei bezüglich der Breitenrichtung B endseitig angeordneten Seitenabschnitte 20.2 weist die Absaug-Läufereinheit 20 eine Mehrzahl von Rollen 21 auf, die mit einer der ersten Führungsschienen 12 zusammenwirken, um eine präzise und reibungsarme Führung zu gewährleisten. Ein sich zwischen den Seitenabschnitten 20.2 erstreckender Mittelabschnitt 20.1 hat keinen unmittelbaren Kontakt mit dem Rahmen 10. Eine nachfolgend noch im Detail erläuterte Antriebseinheit 40, ist dazu eingerichtet, die Absaug-Läufereinheit 20 in der Laufrichtung L oszillierend anzutreiben.

Die Absaug-Läufereinheit 20 weist insbesondere eine Saugeinheit 22 auf, die umgebungsseitig der Siebebene E angeordnet ist und sich in Breitenrichtung B erstreckt. In eingebautem Zustand ist die Saugeinheit 22 über einen Verbindungsstutzen 24 und einen nicht dargestellten flexiblen Schlauch mit einer Vakuumquelle 7 verbunden. Die Vakuumquelle 7 kann beispielsweise ein dem Auswurfbogen 4 zugeordneter Nachbeschleuniger sein. Wie insbesondere in der Schnittdarstellung in Fig. 5 erkennbar ist, weist die Saugeinheit 22 eine Saugabdeckung 23 auf, die zur Siebebene E hin geöffnet ist. Randseitig sind hier Bürstenelemente 25 an der Saugabdeckung 23 befestigt, die in Kontakt mit der Oberfläche des Siebs 63 stehen. Sie dienen einerseits zur Abdichtung und somit zur Verbesserung der Saugwirkung, andererseits wirken sie bei der Bewegung der Absaug-Läufereinheit 20 entlang der Laufrichtung L mechanisch auf die Oberfläche des Siebs 63 ein und tragen dazu bei, Verunreinigungen zu lösen. Die Saugabdeckung 23 der Saugeinheit 22 erstreckt sich in der Breitenrichtung B praktisch über die gesamte Breite des Siebraums 17 sowie eines darin einzusetzenden Siebs 63. In Laufrichtung L entspricht die Ausdehnung der Saugabdeckung 23 allerdings nur ca. 10 % der Ausdehnung des Siebraums 17.

Bezüglich der Siebebene E gegenüber der Saugeinheit 22, und somit kühlerseitig, ist ein Abschirmelement 32 der Abschirm-Läufereinheit 30 angeordnet. Seine Querschnittsfläche senkrecht zur Durchtrittsrichtung D ist in etwa identisch mit derjenigen der Saugabdeckung 23. Das Abschirmelement 32 kann auch als Abschirmblech oder Schattenblech bezeichnet werden. Die Bewegung der Abschirm-Läufereinheit 30 ist an diejenige der Absaug-Läufereinheit 20 zwangsgekoppelt, wie nachfolgend noch erläutert wird. Die Abschirm-Läufereinheit 30 ist am Rahmen 11 entlang der Laufrichtung L translatorisch verschiebbar gelagert, wozu der Rahmen 11 ein paar von zweiten Führungsschienen 13 aufweist, die parallel zur Laufrichtung L verlaufen und bezüglich der Breitenrichtung B einander gegenüber liegen. An jedem von zwei bezüglich der Breitenrichtung B endseitig angeordneten Seitenabschnitten 30.2 weist die Abschirm-Läufereinheit 30 eine Mehrzahl von Rollen 31 auf, die mit einer der zweiten Führungsschienen 13 zusammenwirken. Ein sich zwischen den Seitenabschnitten 30.2 erstreckender Mittelabschnitt 30.1 hat keinen unmittelbaren Kontakt mit dem Rahmen 10.

Die Antriebseinheit 40 weist einen in diesem Fall als Hydraulikzylinder ausgebildeten Aktor 41 auf. Der Aktor 41 ist in diesem Fall also als Linearaktor ausgebildet. Er ist einerseits über ein erstes Aktor-Schwenklager 42 außenseitig am Rahmen 11 gelagert. Andererseits ist er über ein zweites Aktor-Schwenklager 43 schwenkbar mit einem Aktorarm 59 eines Kopplungshebels 44 verbunden. Der Kopplungshebel 44 weist einen Achsstift 60 auf, über welchen er mittels eines Kopplungs-Schwenklagers 61 mit dem Rahmen 11 verbunden ist. Genauer gesagt, ist er um eine Kopplungs-Schwenkachse S schwenkbar, die senkrecht zur Laufrichtung L und zur Breitenrichtung B verläuft. Die Schwenkbewegung des Kopplungshebels 44 verläuft daher parallel zur Siebebene E.

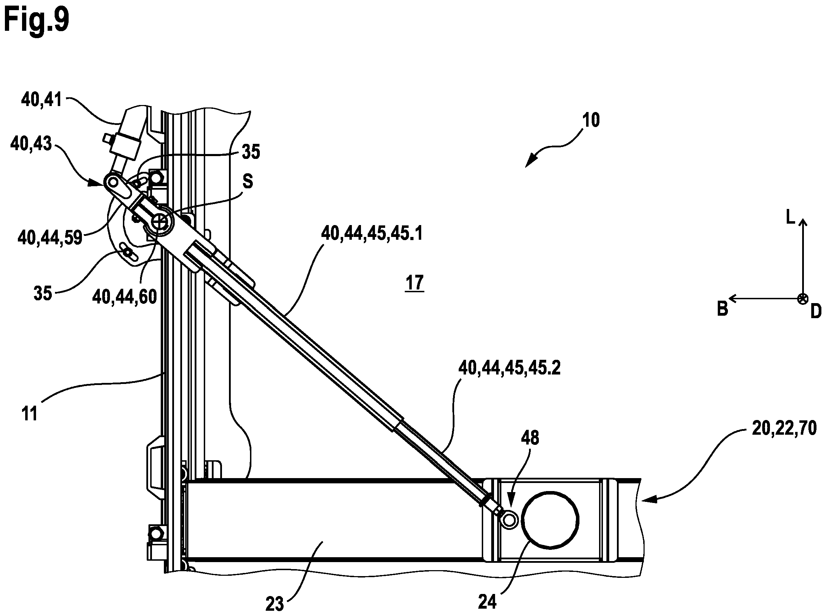

Über den Achsstift 60 sind ein Absaug-Läuferarm 45 des Kopplungshebels 44 und ein Abschirm-Läuferarm 55 des Kopplungshebels 44 drehfest mit dem Aktorarm 59 verbunden. Der Absaug-Läuferarm 45 weist endseitig ein Verschiebungselement 47 auf, dass mit einem Führungselement 26 im Mittelbereich 20.1 der Absaug-Läufereinheit 20 zusammenwirkt. Das Führungselement 26 definiert eine parallel zur Breitenrichtung B verlaufende Führungsbahn für das Verschiebungselement 47. Der Abschirm-Läuferarm 55 weist endseitig ein ähnliches Verschiebungselement 57 auf, dass mit einem Führungselement 36 im Mittelabschnitt 30.1 der Abschirm-Läufereinheit 30 zusammenwirkt. Auch hier definiert das Führungselement 36 eine parallel zur Breitenrichtung B verlaufende Führungsbahn für das Verschiebungselement 57. Bei dieser Ausführungsform ist das jeweilige Verschiebungselement 47, 57 schwenkbar mit dem zugehörigen Läuferarm 45, 55 verbunden. Durch die Verschiebung des jeweiligen Verschiebungselements 47, 57 gegenüber dem Führungselement 26, 36 kann die Schwenkbewegung des jeweiligen Läuferarms 45, 55 in die translatorische Bewegung der jeweiligen Läufereinheit 20, 30 übersetzt werden. Der Aktor 41 wird dabei so angesteuert, dass er abwechselnd expandiert und kontrahiert, woraus eine oszillierende Schwenkbewegung des Kopplungshebels 44 resultiert. Der Aktor 41 sollte so angesteuert werden, dass die Saugeinheit 22 sowohl eine in Fig. 2 in durchgezogenen Linien dargestellte erste Endposition als auch eine in gestrichelten Linien dargestellte zweite Endposition zuverlässig erreicht. Hierzu können über mit dem Rahmen 11 stationär verbundene Sensoren 35 (dargestellt in Fig.9) Positionen des Aktorarms 59 detektiert werden, die den genannten Endpositionen entsprechen.

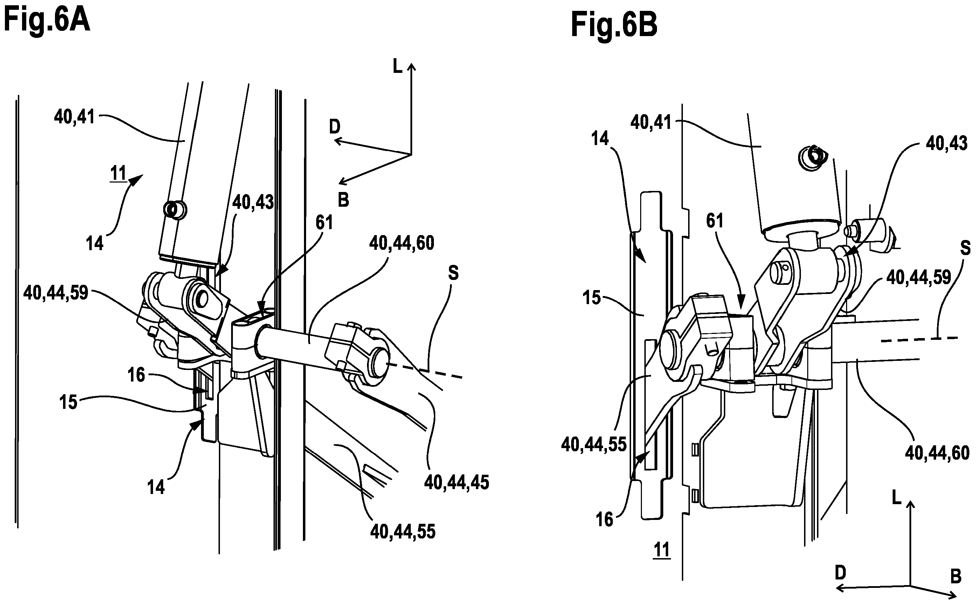

Die Kopplungs-Schwenkachse S ist in Breitenrichtung B zum Siebraum 17 versetzt und an einer dem Siebraum 17 gegenüberliegenden Außenseite des Rahmens 11 angeordnet. Andererseits ist die Abschirm-Läufereinheit 30 innenseitig des Rahmens 11 angeordnet. Während der Absaug-Läuferarm 45 auf der Umgebungsseite U am Rahmen vorbeigeführt ist, ist der Abschirm-Läuferarm 55 durch eine Rahmen-Durchgangsöffnung 14 im Rahmen 11 hindurchgeführt. Da durch diese Öffnung prinzipiell Verunreinigungen hindurchgelangen können, ist ein Schieberelement 15 in Laufrichtung L verschiebbar am Rahmen 11 angeordnet. Dieses deckt die Rahmen-Durchgangsöffnung 14 teilweise ab, wie insbesondere in Fig.6A und 6B erkennbar ist. Das Schieberelement 15 weist eine Schieber-Durchgangsöffnung 16 auf, durch die der Abschirm-Läuferarm 55 hindurchgeführt ist. Die Schieber-Durchgangsöffnung 16 weist sowohl in Laufrichtung L als auch in Durchtrittsrichtung D eine geringere Ausdehnung auf als die Rahmen-Durchgangsöffnung 14, wodurch das Verunreinigungsrisiko für den Kühler 6 und/oder mögliche Verluste an Kühlleistung minimiert werden. Bei der Schwenkbewegung des Abschirm-Läuferarms 55 wird das Schieberelement 15 in Laufrichtung L mit verschoben, so dass die Schieber-Durchgangsöffnung 16 immer in der richtigen Position ist. Zudem ist dadurch die Rahmen-Durchgangsöffnung 14 immer gut abgedichtet.

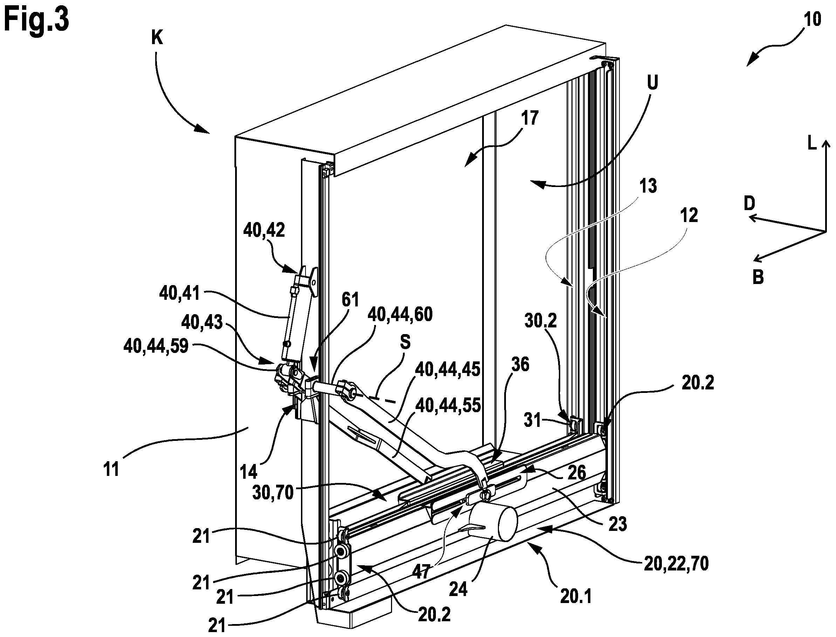

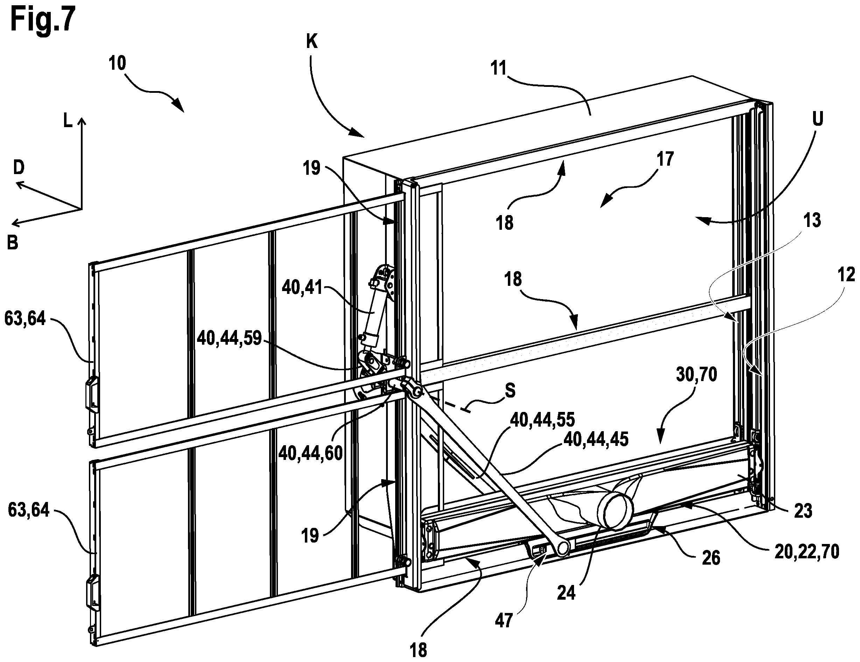

Fig. 7 zeigt eine perspektivische Darstellung einer zweiten Ausführungsform einer erfindungsgemäßen Kühlersieb-Baugruppe 10, die im Wesentlichen der ersten Ausführungsform entspricht. Allerdings ist bei dieser Ausführungsform das Führungselement 26 bezüglich der Laufrichtung L vor der Saugeinheit 22 angeordnet. Außerdem wurde bei der Darstellung der ersten Ausführungsform in Fig. 3 zur besseren Anschauung ein Teil des Rahmens 11 weggelassen, der in Fig. 7 dargestellt ist. Somit ist erkennbar, dass der Rahmen zwei Einführöffnungen 19 aufweist, die sich langgestreckt parallel zur Laufrichtung L erstrecken. Eine Einführöffnung 19 ist bezüglich der Laufrichtung L vor dem Achsstift 60 und die andere hinter dem Achsstift 60 angeordnet. Die Einführöffnungen 19 dienen zum Einführen oder Herausnehmen zweier Siebelemente 64 des Siebs 63. Aufgrund ihrer Anordnung kommt es zu keiner Kollision zwischen dem Achsstift 60 und den Siebelementen 64. Innerhalb des Rahmens 11 werden die Siebelemente 64 mittels einer schienenartigen Siebführung 18 geführt, die in Fig. 2-4 ebenfalls aus Übersichtlichkeitsgründen weggelassen wurde.

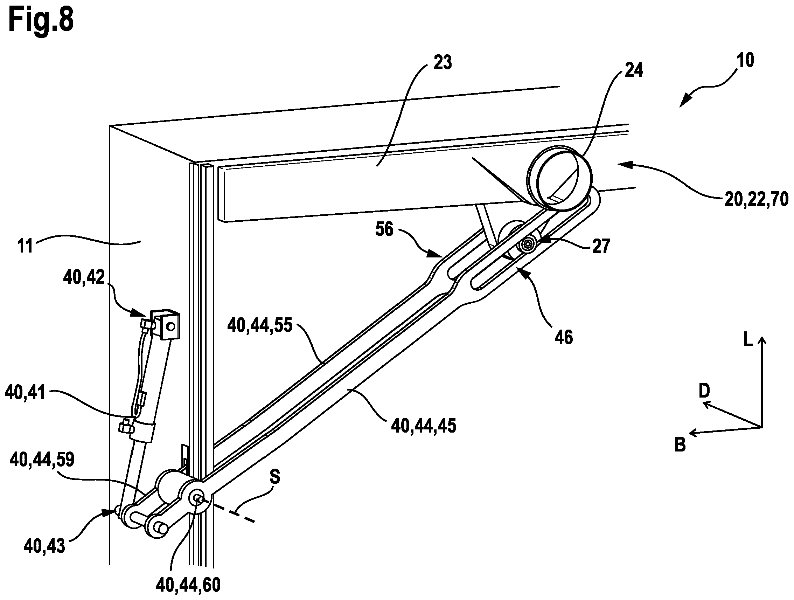

Fig.8 zeigt einen Teil einer dritten Ausführungsform einer erfindungsgemäßen Kühlersieb-Baugruppe 10. Diese ist weitgehend mit der ersten Ausführungsform identisch. Allerdings sind in diesem Fall der Aktorarm 59 und der Abschirm-Läuferarm 55 einstückig miteinander ausgebildet. Außerdem weisen der Absaug-Läuferarm 45 und der Abschirm-Läuferarm 55 als Führungskulissen ausgebildete Führungselemente 46, 56 auf, während an der Absaug-Läufereinheit 20 und der Abschirm-Läufereinheit 30 zugehörige Verschiebungselemente 27 angeordnet sind. Letztere können als Rollen ausgebildet sein.

Fig.9 zeigt einen Teil einer vierten Ausführungsform einer erfindungsgemäßen Kühlersieb-Baugruppe 10. Diese ist wiederum weitgehend mit der ersten Ausführungsform identisch. Allerdings ist der Absaug-Läuferarm 45 teleskopierend ausgebildet. Ein äußerer Teilarm 45.1 ist mit dem Achsstift 60 verbunden, während ein darin verschieblich geführter innerer Teilarm 45.2 über ein Läuferarm-Schwenklager 48 mit der Absaug-Läufereinheit 20 verbunden ist. Der hier nicht sichtbare Abschirm-Läuferarm kann analog oder ähnlich aufgebaut sein.

## Patentansprüche

1. Kühlersieb-Baugruppe (10) für eine Landmaschine (1), mit einem Rahmen (11), der wenigstens teilweise einen Siebraum (17) umgibt, durch welchen Kühlluft (A) in einer Durchtrittsrichtung (D) von einer Umgebungsseite (U) zu einer Kühlerseite (K) hindurchführbar ist und in dem ein sich entlang einer Siebfläche (E) erstreckendes Sieb (63) aufnehmbar ist, mit einer Reinigungseinheit (70) zum Reinigen des Siebs (63), aufweisend wenigstens eine Läufereinheit (20, 30), die am Rahmen (11) entlang einer Laufrichtung (L) translatorisch verschiebbar gelagert ist und sich quer zur Laufrichtung (L) in einer Breitenrichtung (B) erstreckt, sowie mit einer Antriebseinheit (40), welche einen Aktor (41) aufweist und durch welche wenigstens eine Läufereinheit (20, 30) in der Laufrichtung (L) oszillierend antreibbar ist,
**dadurch gekennzeichnet, dass**
die Antriebseinheit (40) einen Kopplungshebel (44) aufweist, der um eine bezüglich des Rahmens (11) stationäre Kopplungs-Schwenkachse (S) schwenkbar ist und der wenigstens indirekt antriebsübertragend an den Aktor (41) gekoppelt ist, wobei wenigstens ein Läuferarm (45, 55) des Kopplungshebels (44) wenigstens indirekt antriebsübertragend an eine Läufereinheit (20, 30) gekoppelt ist.

2. Kühlersieb-Baugruppe nach Anspruch 1, **dadurch gekennzeichnet, dass** die Reinigungseinheit (70) eine Absaug-Läufereinheit (20) aufweist, die eine zur Verbindung mit einer Vakuumquelle (7) vorgesehene Saugeinheit (22) aufweist, die umgebungsseitig der Siebfläche (E) angeordnet ist, wobei bevorzugt ein sich umgebungsseitig der Siebfläche (E) erstreckender Absaug-Läuferarm (45) des Kopplungshebels (44) wenigstens indirekt antriebsübertragend an die Absaug-Läufereinheit (20) gekoppelt ist.

3. Kühlersieb-Baugruppe nach einem der vorangehenden Ansprüche, **dadurch gekennzeichnet, dass** die Kopplungs-Schwenkachse (S) zum Siebraum (17) versetzt angeordnet ist, wobei sie bevorzugt in Breitenrichtung (B) zum Siebraum (17) versetzt und/oder an einer dem Siebraum (17) gegenüberliegenden Außenseite des Rahmens (11) angeordnet ist.

4. Kühlersieb-Baugruppe nach einem der vorangehenden Ansprüche, **dadurch gekennzeichnet, dass** die Reinigungseinheit (70) eine Abschirm-Läufereinheit (30) aufweist mit einem flächigen Abschirmelement (32), welches der Saugeinheit (22) gegenüberliegend kühlerseitig der Siebfläche (E) angeordnet ist, wobei eine Bewegung der Abschirm-Läufereinheit (30) entlang der Laufrichtung (L) durch die Antriebseinheit (40) an die Bewegung der Absaug-Läufereinheit (20) zwangsgekoppelt ist.

5. Kühlersieb-Baugruppe nach einem der vorangehenden Ansprüche, **dadurch gekennzeichnet, dass** der Kopplungshebel (44) einen Abschirm-Läuferarm (55) aufweist, der wenigstens indirekt antriebsübertragend an die Abschirm-Läufereinheit (30) gekoppelt ist und der bevorzugt mit dem Absaug-Läuferarm (45) drehfest verbunden ist.

6. Kühlersieb-Baugruppe nach einem der vorangehenden Ansprüche, **dadurch gekennzeichnet, dass** wenigstens eine Läufereinheit (20, 30) über Seitenabschnitte (20.2) bezüglich der Breitenrichtung (B) beiderseits endseitig am Rahmen (11) gelagert ist.

7. Kühlersieb-Baugruppe nach einem der vorangehenden Ansprüche, **dadurch gekennzeichnet, dass** wenigstens ein Läuferarm (45, 55) und eine diesem zugeordnete Läufereinheit (20, 30) über ein Verschiebungselement (27, 47, 57) und ein Führungselement (26, 36, 46, 56) zusammenwirken, welches Führungselement (26, 36, 46, 56) eine im Winkel zur Laufrichtung (L) verlaufende Verschiebungsbahn definiert, entlang welcher das Verschiebungselement (27, 47, 57) verschiebbar geführt ist.

8. Kühlersieb-Baugruppe nach einem der vorangehenden Ansprüche, **dadurch gekennzeichnet, dass** wenigstens ein Läuferarm (45, 55) teleskopierend ausgebildet und über ein Schwenklager (48) mit der zugehörigen Läufereinheit (20, 30) verbunden ist.

9. Kühlersieb-Baugruppe nach einem der vorangehenden Ansprüche, **dadurch gekennzeichnet, dass** der Kopplungshebel (44) einen drehfest mit dem wenigstens einen Läuferarm (45, 55) verbundenen Aktorarm (59) aufweist, der wenigstens indirekt an den Aktor (41) gekoppelt ist.

10. Kühlersieb-Baugruppe nach einem der vorangehenden Ansprüche, **dadurch gekennzeichnet, dass** der Aktor (41) als Linearaktor ausgebildet.

11. Kühlersieb-Baugruppe nach einem der vorangehenden Ansprüche, **dadurch gekennzeichnet, dass** der Linearaktor (41) einerseits schwenkbar mit dem Rahmen (11) verbunden ist sowie andererseits schwenkbar mit dem Aktorarm (59) verbunden ist.

12. Kühlersieb-Baugruppe nach einem der vorangehenden Ansprüche, **dadurch gekennzeichnet, dass** wenigstens ein Läuferarm (45, 55), bevorzugt der Abschirm-Läuferarm (55), durch eine Rahmen-Durchgangsöffnung (14) im Rahmen (11) hindurchgeführt ist.

13. Kühlersieb-Baugruppe nach einem der vorangehenden Ansprüche, **dadurch gekennzeichnet, dass** ein Schieberelement (15) in Laufrichtung (L) verschiebbar am Rahmen (11) angeordnet ist, welches die Rahmen-Durchgangsöffnung (14) teilweise abdeckt und eine Schieber-Durchgangsöffnung (16) aufweist, durch welche der Läuferarm (45, 55) hindurchgeführt ist und die bevorzugt in Laufrichtung (L) eine geringere Ausdehnung aufweist als die Rahmen-Durchgangsöffnung (14).

14. Kühlersieb-Baugruppe nach einem der vorangehenden Ansprüche, **dadurch gekennzeichnet, dass** der Rahmen (11) wenigstens eine seitliche Einführöffnung (19) aufweist, durch die wenigstens ein Siebelement (64) des Siebes (63) in den Siebraum (17) einbringbar ist, wobei die Einführöffnung (19) bevorzugt in Breitenrichtung (B) seitlich angeordnet ist und sich in Laufrichtung (L) erstreckt.

15. Kühlersieb-Baugruppe nach einem der vorangehenden Ansprüche, **dadurch gekennzeichnet, dass** der Rahmen (11) zwei in Laufrichtung (L) zueinander versetzte Einführöffnungen (19) aufweist, wobei die Kopplungs-Schwenkachse (S) bezüglich der Laufrichtung (L) zwischen den Einführöffnungen (19) angeordnet ist.

16. Landmaschine (1), aufweisend eine Kühlersieb-Baugruppe (10), mit einem Rahmen (11), der wenigstens teilweise einen Siebraum (17) umgibt, durch welchen Kühlluft (A) in einer Durchtrittsrichtung (D) von einer Umgebungsseite (U) zu einer Kühlerseite (K) hindurchführbar ist und in dem ein sich entlang einer Siebfläche (E) erstreckendes Sieb (63) aufnehmbar ist, mit einer Reinigungseinheit (70) zum Reinigen des Siebs (63), aufweisend wenigstens eine Läufereinheit (20, 30), die am Rahmen (11) entlang einer Laufrichtung (L) translatorisch verschiebbar gelagert ist und sich quer zur Laufrichtung (L) in einer Breitenrichtung (B) erstreckt, sowie mit einer Antriebseinheit (40), welche einen Aktor (41) aufweist und durch welche wenigstens eine Läufereinheit (20, 30) in der Laufrichtung (L) oszillierend antreibbar ist,
**dadurch gekennzeichnet, dass**
die Antriebseinheit (40) einen Kopplungshebel (44) aufweist, der um eine bezüglich des Rahmens (11) stationäre Kopplungs-Schwenkachse (S) schwenkbar ist und der wenigstens indirekt antriebsübertragend an den Aktor (41) gekoppelt ist, wobei wenigstens ein Läuferarm (45, 55) des Kopplungshebels (44) wenigstens indirekt antriebsübertragend an eine Läufereinheit (20, 30) gekoppelt ist.
